# EUROPÄISCHE PATENTSCHRIFT

(11) **EP 3 558 733 B1**
(45) Veröffentlichungstag und Bekanntmachung des Hinweises auf die Patenterteilung: **13.04.2022**
(21) Anmeldenummer: 17825744.0
(22) Anmeldetag: 12.12.2017
(51) Int. Cl.: B60J 10/25, B60J 7/00

(54) **DICHTUNGSELEMENT, INSBESONDERE FÜR EIN KFZ-SCHIEBEDACH**
SEALING ELEMENT, SUITABLE FOR A VEHICLE SLIDABLE SUN ROOF
ÉLÉMENT D'ÉTANCHÉITÉ APPROPRIÉ POUR UN TOIT OUVRANT COULISSANT

(30) Priorität: 23.12.2016 DE 202016107342 U; 13.04.2017 DE 102017108111
(43) Veröffentlichungstag der Anmeldung: 30.10.2019
(73) Patentinhaber: REHAU Industries SE & Co. KG, 95111 Rehau (DE)
(72) Erfinder: RÖDEL, Harald, 95111 Rehau (DE); GÖRMER, Lutz, 95111 Rehau (DE); LUNZ, Gabriel, 67130 Waldersbach (FR)
(86) Internationale Anmeldenummer: PCT/EP2017/001418
(87) Internationale Veröffentlichungsnummer: WO 2018/114040

(56) Entgegenhaltungen:
- EP-A2- 0 295 814
- WO-A1-2008/068325
- WO-A1-2015/185122
- DE-B3-102005 033 276
- DE-U1- 20 201 304
- FR-A1- 2 985 225
- JP-A- 2015 150 948

## Beschreibung

Die Erfindung betrifft ein Dichtungselement, insbesondere für ein Kfz-Schiebedach, mit den Merkmalen des Oberbegriffs des Patentanspruchs 1.

Bei Kfz-Schiebedächern besteht grundsätzlich das Problem, dass auf dem Fahrzeugdach bei Regen auftreffendes oder auch stehendes Wasser durch den Übergangsbereich zwischen Kfz-Schiebedach und Kfz-Schiebedachrahmen hindurchtreten und somit letztendlich in die Fahrgastzelle oder den Innenbereich der Kfz-Karosserie eintreten und dort Schäden verursachen kann. Hierbei ist insbesondere zu berücksichtigen, dass bereits geringste Undichtigkeiten über die Jahre hinweg zu erheblichen Wasseransammlungen mit entsprechenden daraus resultierenden Problemen führen können.

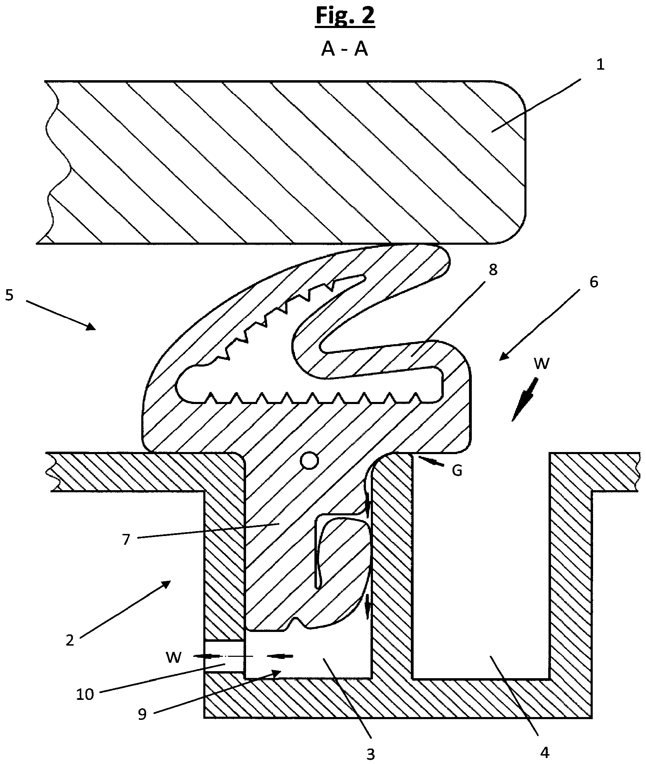

Bei einem vorbekannten Kfz-Schiebedachrahmen ist dieser mit zwei nebeneinander parallel umlaufenden Nuten versehen, die für die Anbindung des Dichtungselementes zur Verfügung stehen bzw. verhindern sollen, dass Regenwasser auf der Karrosserieoberfläche des Fahrzeugdaches steht. Eine solche im Stand der Technik bekannte Konstruktion des Dichtungselementes ist in der Fig. 2 der Figurenbeschreibung dargestellt. Problematisch bei der vorbekannten Konstruktion ist, dass zwischen dem Dichtungselement und der äußeren Oberkante der ersten, innenseitig verlaufenden Nut geringste Wassermengen hindurchtreten können, welche sich dann in der ersten Nut bodenseitig ansammeln. Um ein Aufstauen des Regenwassers in der ersten Nut zu verhindern, ist diese am Nutgrund regelmäßig mit einer Entwässerungsöffnung versehen, welche jedoch dann die ungewünschte Feuchtigkeit lediglich in einen anderen Bereich des Fahrzeuges weiterleitet. Insgesamt ist die durch das Dichtungselement im Stand der Technik gewährleistete Abdichtung gegen Regenwasser auf Dauer unbefriedigend und es treten immer wieder Probleme mit hindurchtretendem Wasser auf, wie z.B. Korrosion bzw. Eintritt von Feuchtigkeit in die Fahrgastzelle etc.

Im Stand der Technik ist ein Dichtungselement aus der DE 10 2005 033 276 B3 bekannt. Ferner zeigt auch die WO 2008/068325 A1 ein ähnliches Dichtungselement für ein Kraftfahrzeug. Ein Dichtungselement mit den Merkmalen des Oberbegriffs des Patentanspruchs 1 zeigt die WO 2015/185122 A1.

Vor dem beschriebenen Hintergrund liegt der Erfindung die Aufgabe zugrunde, ein Dichtungselement mit den eingangs beschriebenen Merkmalen anzugeben, welches eine dauerhaft verbesserte Abdichtung gegenüber Regenwasser gewährleistet.

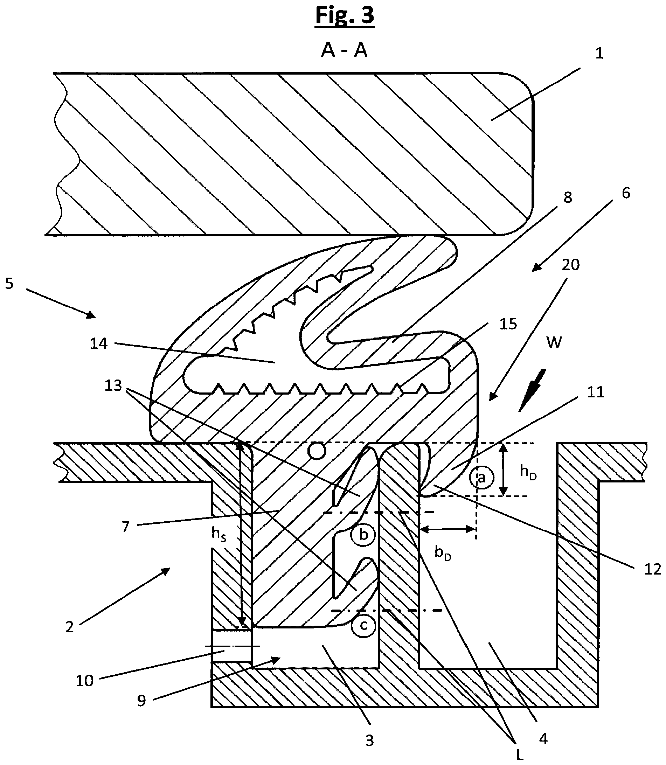

Erfindungsgemäß wird diese Aufgabe durch ein Dichtungselement mit den Merkmalen des Patentanspruchs 1 gelöst. Durch die erfindungsgemäß vorgesehene, an den Dichtungskörper angeformte Dichtlippe wird verhindert, dass an der äußeren Oberkante der ersten Nut Wasser unter der Dichtung hindurchtreten und somit in die erste Nut eintreten kann (s. Fig. 3). Das Wasser wird somit vollständig in der äußeren, zweiten Nut gehalten, was hinsichtlich der Funktion und auch der Optik unkritisch ist. Durch die erfindungsgemäße Maßnahme wird der konstruktive Aufwand für das Dichtungselement nur geringfügig bei gleichzeitig nachhaltiger Verbesserung der Dichtigkeit erhöht.

Erfindungsgemäß ist die Querschnittshöhe der Dichtlippe geringer als die Querschnittshöhe des Steckfußes. Hierbei beträgt die Querschnittshöhe der Dichtlippe weniger als die Hälfte der Querschnittshöhe des Steckfußes. D.h., dass mit einer lediglich kleinen Dichtungslippe, welche in den Freiraum der zweiten Nut hineinragt, die gewünschte Verbesserung der Abdichtung bereits gewährleistet werden kann.

Erfindungsgemäß weist die Dichtlippe einen zahnartigen Querschnitt mit einer an der Innenwandung der zweiten Nut anliegenden Zahnspitze auf. Diese Zahnspitze liegt vorzugsweise mindestens 1 mm, vorzugsweise mindestens 2 mm unterhalb des oberen Randes der zweiten Nut an dieser an. Hierdurch wird der Übergang zwischen zweiter Nut und Dichtlippe nach unten verlegt, wodurch die Dichtigkeit weiter verbessert wird. Ferner ist erfindungsgemäß vorgesehen, dass die Dichtlippe oberhalb der Zahnspitze von der Wandung der zweite Nut beabstandet ist. Hierdurch wird eine sich ggf. einstellende Kriechneigung der Flüssigkeit zwischen Dichtungslippe und Nutwand vermieden und damit ein Wandern von Spritzwasser entlang der Wandung der zweiten Nut noch oben wirksam unterbunden.

Im Rahmen der Erfindung liegt es ferner, dass die Dichtlippe zum von der zweien Nut definierten Freiraum hin konvex und / oder zum Steckfuß hin konkav ausgebildet ist. Auch diese konstruktive Gestaltung trägt dazu bei, dass ein Wassereintritt in die erste Nut erschwert wird.

Zweckmäßigerweise weist die Dichtlippe im Querschnitt eine Breite von maximal 5 mm, vorzugsweise maximal 3 mm, insbesondere maximal 2 mm auf. Im Rahmen der Erfindung liegt es ferner, dass zur zweiten Nut hin die Dichtlippe mit dem Dichtungsabschnitt bündig abschließt.

Vorzugsweise ist an den Steckfuß mindestens eine elastische Steckfußlippe angeformt, die einen Spalt zwischen Steckfuß und Wandung der ersten Nut zusätzlich gegen Wassereintritt abdichtet. Im Rahmen der Erfindung liegt es hierbei insbesondere, dass mindestens zwei vertikal voneinander beabstandete Steckfußlippen vorgesehen sind, sodass hiermit zwei zusätzliche konstruktive Maßnahmen vorgenommen werden, um einen Eintritt von Wasser in den Nutgrund der ersten Nut zu verhindern. Zweckmäßigerweise weist die Steckfußlippe einen im Wesentlichen rechteckförmigen Querschnitt auf und klappt beim Eindrücken in die erste Nut nach oben.

Zweckmäßigerweise weist der Dichtungskörper im Bereich des Dichtungsabschnittes mindestens eine Hohlkammer auf. Diese Hohlkammer weist vorzugsweise eine zahnartige innenseitige Hohlkammerwandung auf. Hierdurch ist sichergestellt, dass es bei einem Zusammendrücken der Dichtung durch die Auflage des Schiebedaches zu keiner Verklebung vom Innenwandungsbereich kommt und somit ein optimales Rückstellvermögen gewährleistet ist. Der Dichtungskörper ist zweckmäßigerweise als Silikonprofil ausgebildet, welches insbesondere im Wege eines Extrusionsverfahrens hergestellt werden kann.

Gegenstand der Erfindung ist ferner eine Kfz-Schiebedachanordnung mit einem Kfz-Schiebedach und einem das Kfz-Schiebedach im Schließzustand einfassenden Kfz-Schiebedachrahmen, wobei der Kfz-Schiebedachrahmen mit einer umlaufenden ersten Nut und einer außenseitig daneben parallel verlaufenden umlaufenden zweiten Nut versehen ist, und wobei in die beiden Nuten ein Dichtungselement der vorstehend beschriebenen Art eingesetzt ist. Der Kfz-Schiebedachrahmen ist zweckmäßigerweise als Kunststoff-Spritzgussteil ausgebildet.

Wie erläutert, findet das erfindungsgemäße Dichtungselement insbesondere Einsatz für ein Kfz-Schiebedach. Im Rahmen der Erfindung - und damit vom Patentanspruch 1 grundsätzlich ebenfalls umfasst - liegt es jedoch auch, das Dichtungselement für andere Zwecke, insbesondere im Automobilbereich einzusetzen. Eine weitere bevorzugte Anwendung des unter Schutz gestellten Dichtungselementes ist insbesondere die Abdichtung eines Kfz-Seitenschiebefensters, wobei die Position dieses Fensters z.B. mit einer elektrischen und/oder manuellen Vorrichtung verändert werden kann.

Im Folgenden wird die Erfindung anhand einer lediglich ein Ausführungsbeispiel darstellenden Zeichnung ausführlich erläutert. Es zeigen schematisch:
- Fig. 1:: eine Kfz-Schiebedachanordnung in einer Draufsicht auf das Kraftfahrzeug,
- Fig. 2:: ein Dichtungselement für das in Fig. 1 dargestellte Kfz-Schiebedach gemäß dem Stand in einer Querschnittsdarstellung gemäß dem Schnitt A - A in Fig. 1 und
- Fig. 3:: ein erfindungsgemäßes Dichtungselement einer der Fig. 2 entsprechenden Darstellung.

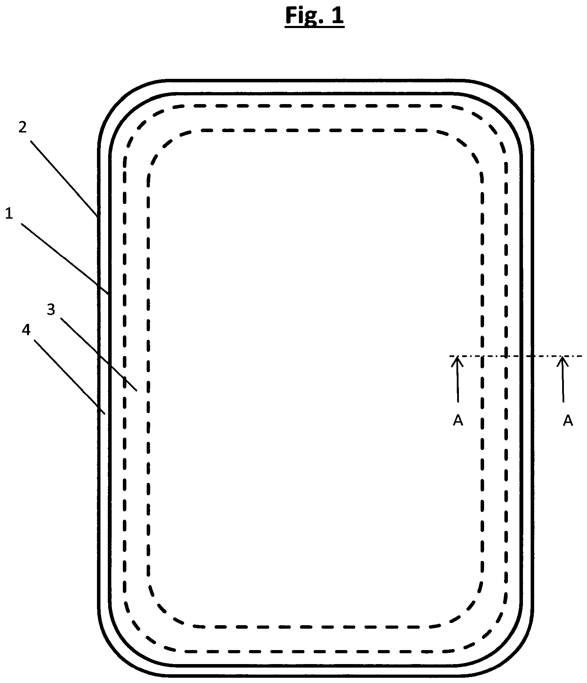

Die Fig. 1 zeigt in einer Draufsicht eine Kfz-Schiebedachanordnung mit einem Kfz-Schiebedach 1. Das Kfz-Schiebedach 1 ist im Schließzustand vollständig von einem Kfz-Schiebedachrahmen 2 eingefasst. Der Kfz-Schiebedachrahmen 2 ist mit einer umlaufenden ersten Nut 3 und einer außenseitig daneben parallel umlaufenden zweiten Nut 4 versehen. In die beiden Nuten 3, 4 ist ein Dichtungselement 5 eingesetzt, welches nachfolgend ausführlich beschrieben wird.

Die Fig. 2 zeigt in solches Dichtungselement 5 gemäß dem Stand der Technik. Das Dichtungselement 5 weist einen Dichtungskörper 6 mit einem Steckfuß 7 und einem Dichtungsabschnitt 8 auf. Der Steckfuß 7 ist in die erste umlaufende Nut 3 des Kfz-Schiebedachrahmens 2 eingesetzt. Auf dem elastischen Dichtungsabschnitt 8 liegt das Kfz-Schiebedach auf 1. Es ist in der Fig. 2 erkennbar, dass Wasser W über die außenseitige zweite Nut 4 über den Grenzbereich G von Dichtungselement 5 und innenseitiger Oberkante der zweiten Nut 4 in die erste Nut 3 eindringen kann und hierüber letztendlich im Nutgrund 9 der ersten Nut 3 landet. Zwar kann dieses Wasser W über eine Öffnung 10 aus der ersten Nut 3 abgeleitet werden, eine Ableitung dieses Wassers W derart, dass es dauerhaft zu keiner Funktionsstörung bzw. Beschädigung des Fahrzeuges kommt, ist jedoch schwierig.

Die Fig. 3 zeigt ein Dichtungselement 5 gemäß der erfindungsgemäßen Lehre. Es ist erkennbar, dass der Dichtungskörper 6 eine in die außenseitige zweite Nut 4 des Kfz-Schiebedachrahmens 2 eingreifende Dichtlippe 11 aufweist, die einen Eintritt von Wasser in die erste Nut 4 verhindert. Es ist ferner erkennbar, dass die Querschnittshöhe h_{D} der Dichtlippe 11 geringer als die Querschnittshöhe h_{S} des Steckfußes 7 ist, nämlich im Ausführungsbeispiel weniger als ein Drittel der Querschnittshöhe h_{D} des Steckfußes 7 beträgt. Die Querschnittshöhe h_{D} des Steckfußes 7 beträgt maximal 5 mm, z.B. 1 - 5 mm, insbesondere 1 - 3 mm. Die Dichtlippe 11 weist einen zahnartigen Querschnitt mit einer an der Innenwandung der zweiten Nut 4 anliegenden Zahnspitze 12 auf. Die Dichtlippe 11 ist oberhalb der Zahnspitze 12 von der Wandung der zweiten Nut 4 beabstandet. Ferner ist die Dichtlippe 11 zur zweiten Nut 4 hin konvex und zum Steckfuß 7 hin konkav ausgebildet. Die Dichtlippe 11 weist im Ausführungsbeispiel im Querschnitt eine Breite b_{D} von weniger als 3 mm auf. Es ist ferner erkennbar, dass zur zweiten Nut 4 hin die Dichtlippe 11 mit dem Dichtungsabschnitt 8 bündig abschließt und somit nach außen hin gemeinsam eine glatte Außenfläche 20 des Dichtungskörpers 6 bildet.

An den Steckfuß 7 sind zwei vertikal voneinander beabstandete elastische Steckfußlippen 13 angeformt, die den Spalt zwischen Steckfuß 7 und Wandung der ersten Nut 3 zusätzlich gegen Wassereintritt abdichten. Die Steckfußlippen 13 weisen jeweils einen im Wesentlichen rechteckförmigen Querschnitt auf und klappen beim Eindrücken in die erste Nut 3 nach oben. Im unbelasteten Zustand sind diese beiden Steckfußlippen 11 im Wesentlichen horizontal ausgerichtet (durch gestrichelte Linien L angedeutet). Es ist ferner erkennbar, dass der Dichtungskörper 6 im Bereich des Dichtungsabschnittes 8 eine Hohlkammer 14 aufweist, die innenseitig eine zahnartige Hohlkammerwandung 15 aufweist. Der Dichtungskörper 6 ist als extrudiertes Silikonprofil ausgebildet. Insgesamt sind erfindungsgemäß also drei hintereinander geschaltete Abdichtungsmaßnahmen a, b, c vorgesehen, die einen Eintritt von Wasser in den Nutgrund 9 der ersten Nut 3 verhindern.

In den Figuren nicht dargestellt, jedoch im Rahmen der Erfindung liegt es ebenso, das Dichtungselement 5 zur Abdichtung eines Kfz-Seitenschiebefensters einzusetzen, wobei die Position dieses Seitenschiebefensters z.B. mit einer elektrischen und/oder manuellen Vorrichtung verändert werden kann.

## Patentansprüche

1. Dichtungselement (5), insbesondere für ein Kfz-Schiebedach (1), mit
- einem Dichtungskörper (6) mit einem Steckfuß (7) und einem Dichtungsabschnitt (8),
- wobei der Steckfuß (7) in eine erste, vorzugsweise umlaufende, Nut (3) eines das Kfz-Schiebedach (1) im Schließzustand einfassenden Kfz-Schiebedachrahmens (2) einsetzbar ist und
- wobei auf den elastischen Dichtungsabschnitt (8) das Kfz-Schiebedach (1) auflegbar ist,
- wobei der Dichtungskörper (6) mindestens eine in eine - zur ersten Nut (3) außenseitig benachbarte und parallele, vorzugsweise ebenfalls umlaufende - zweite Nut (4) des Kfz-Schiebedachrahmens (2) einen Eingriff erlaubende Dichtlippe (11) aufweist, die einen Eintritt von Wasser (W) in die erste Nut (3) verhindert,
- wobei die Dichtlippe (11) einen zahnartigen Querschnitt mit einer an der Innenwandung der zweiten Nut (4) anliegenden Zahnspitze (12) aufweist, und
- wobei die Dichtlippe (11) oberhalb der Zahnspitze (12) von der Wandung der zweiten Nut (4) beabstandet ist,
**dadurch gekennzeichnet, dass** die Querschnittshöhe (h_{D}) der Dichtlippe (11) weniger als die Hälfte der Querschnittshöhe (h_{S}) des Steckfußes (7) beträgt.

2. Dichtungselement (5) nach Anspruch 1, **dadurch gekennzeichnet, dass** die Dichtlippe (11) zur zweiten Nut (4) hin konvex und/oder zum Steckfuß (7) hin konkav ausgebildet ist.

3. Dichtungselement (5) nach Anspruch 1 oder 2, **dadurch gekennzeichnet, dass** die Dichtlippe (11) im Querschnitt eine Breite (bo) von maximal 5 mm, vorzugsweise maximal 3 mm aufweist.

4. Dichtungselement (5) nach einem der Ansprüche 1 bis 3, **dadurch gekennzeichnet, dass** zur zweiten Nut (4) hin die Dichtlippe (11) mit dem Dichtungsabschnitt (8) bündig abschließt.

5. Dichtungselement (5) nach einem der Ansprüche 1 bis 4, **dadurch gekennzeichnet, dass** an den Steckfuß (7) mindestens eine elastische Steckfußlippe (13) angeformt ist, die einen Spalt zwischen Steckfuß (7) und Wandung der ersten Nut (3) zusätzlich gegen den Eintritt von Wasser (W) abdichtet.

6. Dichtungselement (5) nach Anspruch 5, **dadurch gekennzeichnet, dass** die Steckfußlippe (13) einen im Wesentlichen rechteckförmigen Querschnitt aufweist und beim Eindrücken in die erste Nut (3) nach oben klappt.

7. Dichtungselement (5) nach einem der Ansprüche 1 bis 6, **dadurch gekennzeichnet, dass** der Dichtungskörper (6) mindestens eine Hohlkammer (14) aufweist, die vorzugsweise eine zahnartige innenseitige Hohlkammerwandung (15) besitzt.

8. Dichtungselement (5) nach einem der Ansprüche 1 bis 7, **dadurch gekennzeichnet, dass** der Dichtungskörper (6) als, vorzugsweise extrudiertes, Silikonprofil ausgebildet ist.

9. Kfz-Schiebedachanordnung mit
- einem Kfz-Schiebedach (1) und
- einem das Kfz-Schiebedach (1) im Schließzustand einfassenden Kfz-Schiebedachrahmen (2),
wobei der Kfz-Schiebedachrahmen (2) mit einer umlaufenden ersten Nut (3) und einer außenseitig daneben parallel umlaufenden zweiten Nut (4) versehen ist, und wobei in die beiden Nuten (3, 4) ein Dichtungselement (5) nach einem der Ansprüche 1 bis 8 eingesetzt ist.

10. Kfz-Schiebedachanordnung nach Anspruch 9, wobei der Kfz-Schiebedachrahmen (2) als Kunststoff-Spritzgussteil ausgebildet ist.

## Claims

1. A sealing element (5), in particular for a motor vehicle sunroof (1), having
- a sealing member (6) with a foot insert (7) and a sealing portion (8),
- wherein the foot insert (7) is insertable into a first, preferably circumferential, groove (3) of a motor vehicle sunroof frame (2) bordering the motor vehicle sunroof (1) in the closed state and
- wherein the motor vehicle sunroof (1) can be placed on the elastic sealing portion (8),
- wherein the sealing member (6) has at least one sealing lip (11) allowing engagement in a second groove (4) of the motor vehicle sunroof frame (2) - adjacent and parallel to the first groove (3) on the outside and preferably likewise circumferential -, which sealing lip (11) prevents water (W) from entering the first groove (3),
- wherein the sealing lip (11) has a tooth-like cross-section with a tooth tip (12) lying against the inner wall of the second groove (4), and
- wherein the sealing lip (11) above the tooth tip (12) is spaced apart from the wall of the second groove (4),
**characterised in that** the cross-sectional height (h_{D}) of the sealing lip (11) is less than half of the cross-sectional height (h_{S}) of the foot insert (7).

2. The sealing element (5) according to claim 1, **characterised in that** the sealing lip (11) is formed such that it is convex towards the second groove (4) and/or concave towards the foot insert (7).

3. The sealing element (5) according to claim 1 or 2, **characterised in that** the sealing lip (11) in cross-section has a width (bo) of no more than 5 mm, preferably no more than 3 mm.

4. The sealing element (5) according to one of claims 1 to 3, **characterised in that** the sealing lip (11) is flush with the sealing portion (8) towards the second groove (4).

5. The sealing element (5) according to one of claims 1 to 4, **characterised in that** at least one elastic foot insert lip (13) is moulded on the foot insert (7), which elastic foot insert lip (13) additionally seals a gap between foot insert (7) and wall of the first groove (3) against the entry of water (W).

6. The sealing element (5) according to claim 5, **characterised in that** the foot insert lip (13) has a substantially rectangular cross-section and folds upwards when pressed into the first groove (3).

7. The sealing element (5) according to one of claims 1 to 6, **characterised in that** the sealing member (6) has at least one hollow chamber (14), which preferably possesses a tooth-like inner hollow chamber wall (15).

8. The sealing element (5) according to one of claims 1 to 7, **characterised in that** the sealing member (6) is formed as a, preferably extruded, silicone profile.

9. A motor vehicle sunroof arrangement having
- a motor vehicle sunroof (1) and
- a motor vehicle sunroof frame (2) bordering the motor vehicle sunroof (1) in the closed state,
wherein the motor vehicle sunroof frame (2) is provided with a circumferential first groove (3) and a circumferential second groove (4) adjacent and parallel thereto on the outside, and wherein a sealing element (5) according to one of claims 1 to 8 is inserted into the two grooves (3, 4).

10. The motor vehicle sunroof arrangement according to claim 9, wherein the motor vehicle sunroof frame (2) is formed as a plastics injection-moulded part.

## Revendications

1. Elément d'étanchéité (5), en particulier pour un toit ouvrant de véhicule à moteur (1), avec
- un corps d'étanchéité (6) avec un pied enfichable (7) et une section d'étanchéité (8),
- dans lequel le pied enfichable (7) peut être inséré dans une première rainure (3), de préférence périphérique, d'un cadre de toit ouvrant de véhicule à moteur (2) entourant dans l'état fermé le toit ouvrant de véhicule à moteur (1), et
- dans lequel le toit ouvrant de véhicule à moteur (1) peut être placé sur la section d'étanchéité (8) élastique,
- dans lequel le corps d'étanchéité (6) présente au moins une lèvre étanche (11) permettant une prise avec une deuxième rainure (4), adjacente côté extérieur par rapport à la première rainure (3) et parallèle, de préférence également périphérique, du cadre de toit ouvrant de véhicule à moteur (2), qui empêche une infiltration d'eau (W) dans la première rainure (3),
- dans lequel la lèvre étanche (11) présente une section transversale en forme de dent avec une pointe de dent (12) reposant sur la paroi intérieure de la deuxième rainure (4), et
- dans lequel la lèvre étanche (11) est tenue à distance de la paroi de la deuxième rainure (4) au-dessus de la pointe de dent (12),
**caractérisé en ce que** la hauteur de section transversale (h_{D}) de la lèvre étanche (11) est inférieure à la moitié de la hauteur de section transversale (h_{S}) du pied enfichable (7).

2. Elément d'étanchéité (5) selon la revendication 1, **caractérisé en ce que** la lèvre étanche (11) est réalisée de manière convexe en direction de la deuxième rainure (4) et/ou de manière concave en direction du pied enfichable (7).

3. Elément d'étanchéité (5) selon la revendication 1 ou 2, **caractérisé en ce que** la lèvre étanche (11) présente dans la section transversale une largeur (bo) de 5 mm au maximum, de préférence de 3 mm au maximum.

4. Elément d'étanchéité (5) selon l'une quelconque des revendications 1 à 3, **caractérisé en ce que** la lèvre étanche (11) se termine en affleurement avec la section d'étanchéité (8) en direction de la deuxième rainure (4).

5. Elément d'étanchéité (5) selon l'une quelconque des revendications 1 à 4, **caractérisé en ce qu'**est formée sur le pied enfichable (7) au moins une lèvre de pied enfichable (13) élastique, qui étanchéifie une fente entre le pied enfichable (7) et la paroi de la première rainure (3) en supplément pour empêcher l'infiltration de l'eau (W).

6. Elément d'étanchéité (5) selon la revendication 5, **caractérisé en ce que** la lèvre de pied enfichable (13) présente une section transversale sensiblement de forme rectangulaire et se rabat vers le haut lorsqu'elle est enfoncée dans la première rainure (3).

7. Elément d'étanchéité (5) selon l'une quelconque des revendications 1 à 6, **caractérisé en ce que** le corps d'étanchéité (6) présente au moins un compartiment creux (14), qui possède de préférence une paroi de compartiment creux (15) dentée côté intérieur.

8. Elément d'étanchéité (5) selon l'une quelconque des revendications 1 à 7, **caractérisé en ce que** le corps d'étanchéité (6) est réalisé en tant que profil en silicone de préférence extrudé.

9. Ensemble formant toit ouvrant de véhicule à moteur avec
- un toit ouvrant de véhicule à moteur (1) et
- un cadre de toit ouvrant de véhicule à moteur (2) entourant le toit ouvrant de véhicule à moteur (1) dans l'état fermé,
dans lequel le cadre de toit ouvrant de véhicule à moteur (2) est pourvu d'une première rainure (3) périphérique et d'une deuxième rainure (4) périphérique parallèle latéralement à celle-ci côté extérieur, et dans lequel un élément d'étanchéité (5) selon l'une quelconque des revendications 1 à 8 est inséré dans les deux rainures (3, 4).

10. Ensemble formant toit ouvrant de véhicule à moteur selon la revendication 9, dans lequel le cadre de toit ouvrant de véhicule à moteur (2) est réalisé en tant que pièce moulée par injection en matière plastique.
